# EUROPÄISCHE PATENTSCHRIFT

(11) **EP 0 565 679 B1**
(45) Veröffentlichungstag und Bekanntmachung des Hinweises auf die Patenterteilung: **14.02.1996**
(21) Anmeldenummer: 92922500.1
(22) Anmeldetag: 05.11.1992
(51) Int. Cl.: E03F 3/06, F16L 55/165

(54) **VERFAHREN INSBESONDERE ZUM ERSETZEN VON KANALISATIONSROHREN SOWIE EINE VORICHTUNG ZUR DURCHFÜHRUNG DES VERFAHRENS**
METHOD FOR THE REPLACEMENT OF, IN PARTICULAR, SEWAGE PIPES, AND A DEVICE FOR CARRYING OUT THE METHOD
PROCEDE SERVANT NOTAMMENT AU REMPLACEMENT DES CANALISATIONS D'EGOUT, ET DISPOSITIF D'APPLICATION DE CE PROCEDE

(30) Priorität: 06.11.1991 CH 3235/91
(43) Veröffentlichungstag der Anmeldung: 20.10.1993
(73) Patentinhaber: Granella, Bruno, CH-5200 Brugg (CH)
(72) Erfinder: Granella, Bruno, CH-5200 Brugg (CH)
(74) Vertreter: Luchs, Willi
(86) Internationale Anmeldenummer: CH9200223
(87) Internationale Veröffentlichungsnummer: WO9309305

(56) Entgegenhaltungen:
- EP-A- 0 411 278
- DE-A- 3 620 026
- DE-A- 3 715 653
- DE-C- 3 801 824
- GB-A- 2 167 156

## Beschreibung

Das heutige Kanalisationsnetz in Europa ist in weiten Teilen sanierungsbedürftig infolge Korrosion, Senkungen oder anderen Schäden von lecken Kanalrohren und infolge Unterdimensionierung, weil die ursprüngliche Planung der Siedlungsentwicklung und der Abwassermengen pro Einwohner in vielen Fällen durch die seitherige Entwicklung überholt wurde.

Zur Sanierung solcher Kanalisationsrohre ist ein Pressrohr-Vortriebsverfahren bekannt, bei welchem in Abständen von jeweils etwa 60 und mehr Metern längs des Kanalisationsrohres bei bestehenden oder zu erstellenden Kontrollschächten Baugruben ausgehoben werden (DE-OS 36 20 026). Von den Schächten aus wird ein Fräskopf längs des zu sanierenden Rohres vorgetrieben. Das Drehlager des Fräskopfes wird an dem Stirnende eines Rohrstücks des neuen Kanalisationsrohres montiert. Das neue Rohr wird mit dem Fräskopf von der Baugrube aus in Richtung des zu sanierenden Rohres mittels Zylinderaggregaten vorangepresst. Sukzessive werden am hinteren Ende des Rohrstückes weitere Produktrohre angesetzt. Dieses Vorgehen hat den Vorteil, dass das zu sanierende Kanalisationsrohr nicht über seine ganze Länge freigelegt werden muss, so dass die Verkehrsbehinderung weniger gravierend ist.

Schwierigkeiten bereitet allerdings bei dieser bekannten Vorrichtung der Abbau von armierten Betonrohren und die Führung des Fräskopfes. Oft ist es erwünscht, das neue Rohr sohlengleich zu verlegen. Wenn es einen grösseren Durchmesser hat, ist seine Achse deshalb höher als jene des alten Rohres. Ausserdem sind Kanalisationsrohre häufig in den Boden einbetoniert, wobei die Betondicke gewöhnlich über den Umfang schwankt, oben beispielsweise am dünnsten ist.

Beide obigen Umstände bewirken, dass die vorbekannte Vorrichtung leicht seitlich oder nach oben verläuft. Ein radialer Versatz des Fräskopfes ist dann kaum mehr zu korrigieren.

In der Druckschrift GB-A-2 167 156 ist ein System zum Ersetzen von Kanalrohren vorbekannt, bei welchem im wesentlichen ein Expansionskopf mit einem Führungselement in einem zu ersetzenden Rohr mittels eines Bohrrohres vorwärtsgetrieben wird. Durch die konische Ausbildung des Expansionskopfes wird das alte Rohr beim Vorwärtsschieben des Kopfes nach aussen gedrückt und unmittelbar dahinter das neue Rohr eingeschoben. Der Expansionskopf wird beim linearen Bewegen zusätzlich gedreht, womit das abzutragende Rohr in Stücke zerbrechen und so leichter auseinandergedrückt bzw. bersten soll. Das Ersetzen von alten ausgedienten Rohren mit diesem System ist jedoch mit den folgenden erheblichen Nachteilen verbunden. Bei diesem System muss die das zu sanierende Rohr umgebende Erde zwangsweise ausweichen können. Normalerweise ist das alte Rohr nicht durchwegs von weicher Erde umgeben, sondern es sind stets Stellen vorhanden, bei denen felsiges oder grobsteiniges Material an dieses angrenzt oder des öfteren ist es sogar zumindest stellenweise einbetoniert. Um an solchen Stellen das alte Rohr auseinanderzudrücken, ist ein axialer Kraftaufwand notwendig, der mit herkömmlichen Maschinen nicht mehr zu bewerkstelligen ist. Es kann auch vorkommen, dass nur einseitig an dem alten Rohr felsiger Stein anliegt und dann wird das alte Rohr einseitig geberstet und bewirkt ein Abdrängen des Expansionskopfes quer zur Längsachse des Rohres und führt damit zu einem Verklemmen desselben. Bei einer Vergrösserung des Rohr-Innendurchmessers müsste der Neigungswinkel des Expansionskopfes erhöht werden, was nur beschränkt möglich ist, oder er müsste so lange gebaut sein, dass er zu schwer und folglich kaum mehr handhabbar wäre. Mit diesem System ist es fernerhin nur sehr beschränkt möglich, Rohrleitungen zu sanieren, die gekrümmt sind.

Bei der Vorrichtung und dem Verfahren zum Sanieren eines Kanalrohres gemäss der DE-A1-37 15 653 wird das zu sanierende Rohr nicht abgebaut, sondern es wird an dessen Innenwandung bloss ein Sanierungsmaterial aufgetragen. Es ist daher weder ein drehender Fräskopf mit stirnseitigen Schneidkanten vorgesehen noch sind Mittel zum Wegtransportieren von abgetragenem Material erforderlich. Mit diesem Verfahren kann daher keine Vergrösserung, nicht einmal ein gleichbleibender Innendurchmesser des zu sanierenden Rohres erreicht werden.

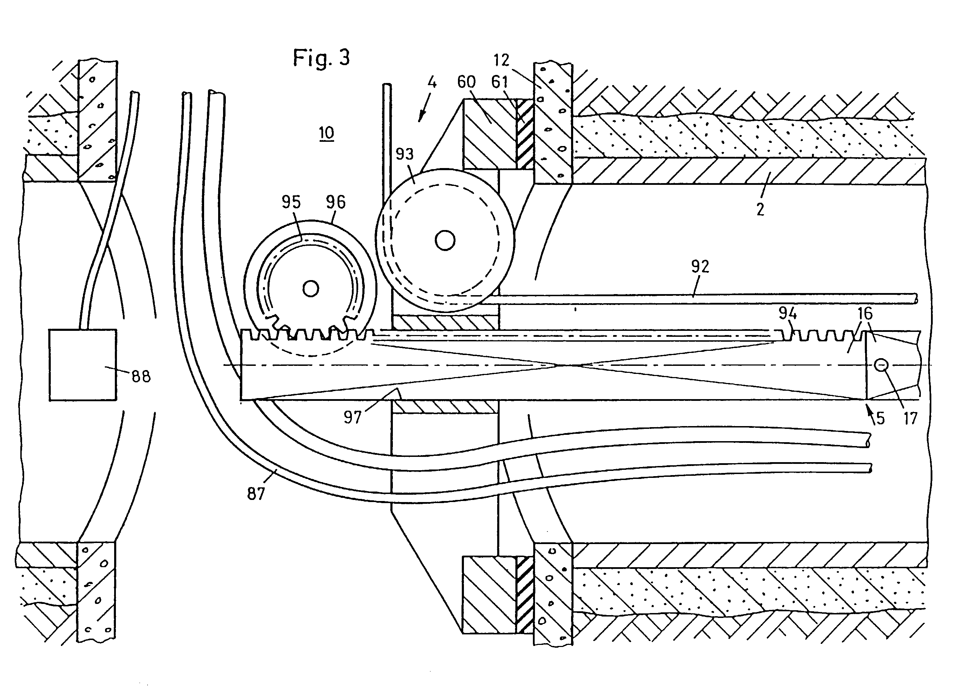

In dem Dokument EP-A1-0 411 278 ist ein Verfahren und eine Vorrichtung zum Zerstören einer erdverlegten Rohrleitung mittels einer Zertrümmerungshülse beschrieben, welche von einer Schlagramme vorwärtsgetrieben wird. Diese Zertrümmerungshülse wird nur in axiale Richtung vorwärtsgetrieben und es besteht bei dieser ein wesentlicher Nachteil, nämlich dass sie einer sehr grossen Abnützung ausgesetzt ist und daher nur für sehr kurze Distanzen eines Rohrabbaus geeignet ist. Zudem besteht mit einer solchen Zertrümmerungshülse die Gefahr, dass das abzubauende Rohr nicht - wie in Fig.3 dargestellt - in gleichmässige Stücke zertrümmert, sondern vielmehr nur gestaucht und infolgedessen ein schnelles Verstopfen der Rohrleitung bewirkt wird.

Der vorliegenden Erfindung liegt die Aufgabe zugrunde, eine Vorrichtung der eingangs genannten Art derart weiterzubilden, dass die obigen Nachteile vermieden werden. Diese Aufgabe wird durch die kennzeichnenden Merkmale des Anspruches 1 gelöst.

Mit diesem erfindungsgemässen Verfahren wird in eindrücklicher Art und Weise erreicht, dass der vorantreibende, an der Stirnseite des abzubauenden Rohres angreifende Fräskopf zu diesem Rohr immer zentriert ist, auch gerade dann, wenn auf diesen Fräskopf aufgrund von unterschiedlichen Rohrwandstärken einseitige Kräfte wirken.

Vorteilhaft ist der Fräskopf dabei mittels einer an ihm stirnseitig angeordneter Führungseinrichtung drehbar gelagert, welche mit einem einstellbaren Druck gegen die Innenwandung des abzubauenden Rohres angedrückt und darin gleitend geführt wird.

Der Fräskopf wird dabei entweder gezogen oder aber vorzugsweise unmittelbar hinter diesem eingeführten Ersatzrohren gestossen.

Damit die Führungseinrichtung in dem abzubauenden Rohr wegen Durchmesserverengungen nicht plötzlich ansteht oder verklemmt, wird dieses Rohr vor dem Ersetzen vorzugsweise mit einem separaten Fräser durchgehend kalibriert.

Bei der entsprechenden Vorrichtung zur Durchführung des Verfahrens nach einem der Ansprüche 1 bis 4 ist der Fräskopf vorteilhaft exzentrisch zur Längsachse des abzubauenden Rohres gelagert, wodurch bei dem mit einem grösseren Aussendurchmesser versehenen Fräskopf bewirkt wird, dass das neue zum alten Rohr unten niveau- oder sohlengleich verlegt werden kann. Dies hat den Vorteil, dass wenn bei Kanalisationen nur Teilstrecken mit neuen grösseren Rohren versehen werden, sich nach unten keine Versetzungen und damit Sümpfe oder Stauungen bilden können.

Im weiteren ist die erfindungsgemässe Vorrichtung mit über dem Umfang der Führungseinrichtung verteilten Schneidelementen versehen, die unmittelbar an die Schneidkanten des Fräskopfes anschliessen und mit diesen zusammenwirken. Wenn nun der Fräskopf gedreht wird, so werden die Armierungsstähle abgeschert und zerkleinert.

Nachfolgend sind Ausführungsbeispiele und weitere Vorteile der Erfindung anhand der Zeichnungen näher erläutert. Darin zeigt:
- Fig. 1: und Fig. 2 zwei aneinander anschliessende Teile eines Längsschnittes durch eine erfindungsgemässe Vorrichtung,
- Fig. 3: und Fig. 4 zwei Teile eines Längsschnittes einer zweiten Ausführungsform,
- Fig. 5: einen Längsschnitt durch eine dritte Ausführungsform in vereinfachter Darstellung,
- Fig. 6: eine vergrösserte Darstellung eines Teils der Ausführungsform nach Fig. 5,
- Fig. 7: einen Längsschnitt durch eine vierte Ausführungsform,
- Fig. 8: eine Stirnansicht eines Schneidringes, und
- Fig. 9: eine Stirnansicht des Fräskopfes.

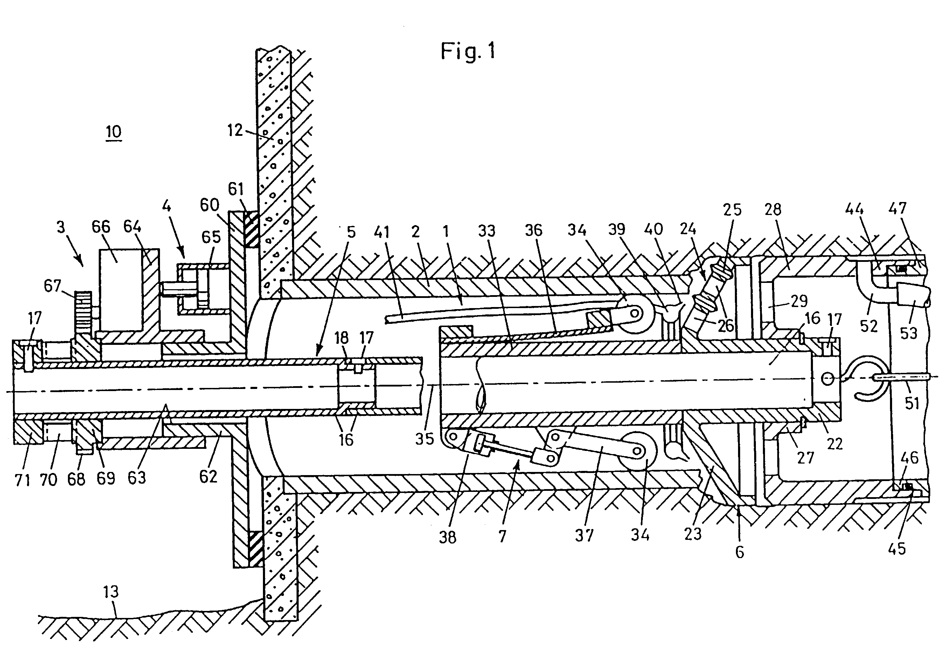

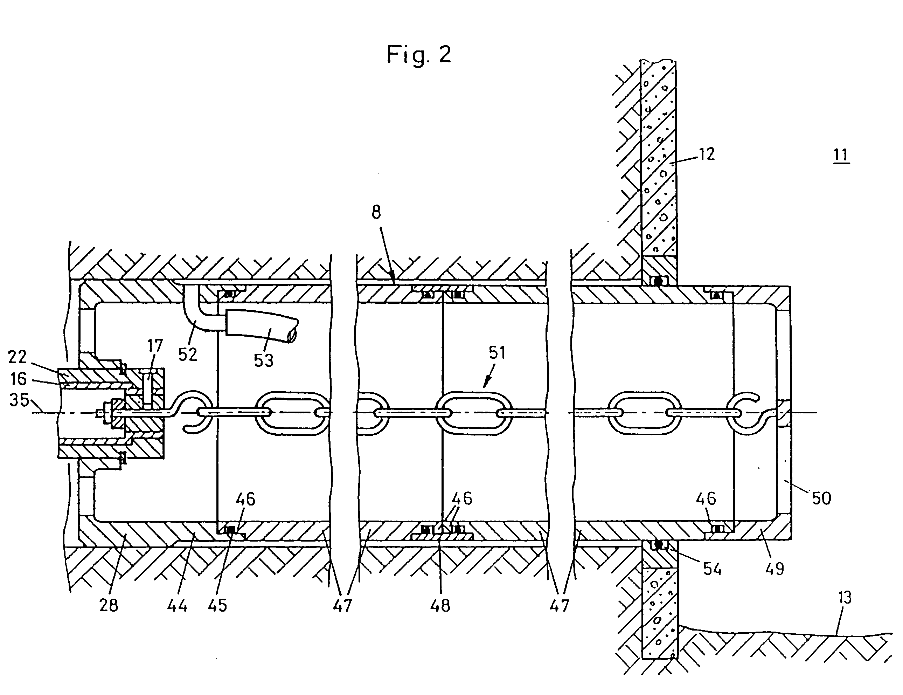

In Fig. 1 und 2 ist eine Vorrichtung 1 zum Sanieren von Kanalrohren 2 schematisch dargestellt. Die Vorrichtung 1 besteht aus einem Drehantrieb 3, einem Hubantrieb 4, einer Zugstange 5; einem Fräskopf 6 sowie einer Führungseinrichtung 7. Die Vorrichtung 1 dient zum Einsetzen eines neuen Kanalrohres 8 anstelle des Rohres 2 und wird im Kanalsystem zwischen zwei Schächten 10, 11 eingesetzt.

Die Schächte 10, 11 werden durch vertikale Betonrohre 12 gebildet, die im betriebsbereiten Zustand unten mit Beton bis etwa zur Unterkante des Kanalrohres 2 angefüllt sind. Auf diesem Boden ist eine Mörtelschicht aufgebracht, in welcher eine Rinne die Fortsetzung der unteren Hälfte der inneren Oberfläche des Rohres 2 bildet. Die Vorrichtung 1 und alle notwendigen Einrichtungen insgesamt werden dann erstellt.

Von einem der beiden Schächte 10, 11 her wird die Zugstange 5 aus Segmenten 16 zusammengesetzt. Die Segmente 16 sind an ihren Stirnenden zug- und in beiden Richtungen drehfest miteinander verbunden, was in Fig. 1 durch Querbolzen 17 angedeutet ist. Die Segmente 16 sind als kreiszylindrische Rohre dargestellt, die am einen Ende einen zylindrischen Ansatz 18 kleineren Durchmessers zur Aufnahme des angrenzenden Segmentes 16 haben.

Im einen Schacht 11 wird die Führungseinrichtung 7 auf die Stange 5 aufgesetzt und ins Kanalrohr 2 eingeschoben. Anschliessend wird am freien Ende der Stange 5 der Fräskopf 6 drehfest und zugsteif montiert, zum Beispiel mit weiteren Querbolzen 17. Der Fräskopf 6 besteht aus einer hohlzylindrischen Nabe 22 und einem kegelförmigen Mantel 23. Im Mantel 23 sind mehrere Fräswerkzeuge 24 montiert, die in Fig. 1 als doppelkegelförmige, drehbar gelagerte, an der Peripherie mit Hartmetall oder Diamant beschichtete Rollen 25 angedeutet sind, wie sie auch von Stollenbohrmaschinen im Bergbau her bekannt sind. Je nach abzutragendem Material können auch stehende Werkzeuge zweckmässig sein. Der Mantel 23 hat mehrere Öffnungen 26 zur Abfuhr des abgebauten Materials. Auf der Nabe 22 ist die Nabe 27 eines kreiszylindrischen, rohrförmigen Schildes 28 drehbar aber axial unverschiebbar gelagert. Schild 28 und Nabe 27 sind über Speichen 29 miteinander verbunden. Der Aussendurchmesser des Schildes 28 entspricht dem Aussendurchmesser des Mantels 23 und ist geringfügig grösser als der Aussendurchmesser des neuen Rohres 8.

Die Führungseinrichtung 7 umfasst einen Lagerkörper 33, in welchem die Stange 16 drehbar ist, und an welcher vier über den Umfang verteilte, als Stützelemente ausgebildete Rollen 34 radial beweglich befestigt sind. Die Rollen 34 stützen sich am Rohr 2 ab. Die Stellung der Rollen 34 ist steuerbar. Damit kann die Achse des Fräskopfes 6 relativ zur Achse 35 des Rohres 2 horizontal und vertikal justiert werden. Die Einstellbarkeit eines Paares der Rollen 34 ist bloss schematisch angedeutet, indem die eine Rolle 34 durch eine Blattfeder 36 radial nach aussen gedrückt wird und die gegenüberliegende Rolle 34 mittels eines doppelarmigen Hebels 37 und eines Hydraulikzylinders 38 radial einstellbar ist.

Die Einstellung kann zum Beispiel mittels Laser-Telemetrie oder auch optisch automatisiert werden, sodass auch allfällige Senkungen oder Verschiebungen des Rohres 2 kompensiert werden können. An dem Lagerkörper 33 kann ein ringförmiges Verteilerrohr 39 mit einem Kranz von Spritzdüsen 40 benachbart dem Fräskopf 6 montiert sein. Die Düsen 40 sind gegen die Fräswerkzeuge 24 gerichtet. Das Rohr 39 wird durch einen Schlauch 41 mit Wasser beaufschlagt.

Der Schild 28 hat am hinteren Ende einen zylindrischen Ansatz 44 mit vermindertem Aussendurchmesser und eine zylindrische Ansenkung 45 zur abdichtenden Aufnahme eines zylindrischen Vorsprungs 46 eines als Pressrohr bezeichneten Rohrabschnittes 47 des neu einzuziehenden Rohres 8. Jeder Rohrabschnitt hat beidseitig einen Vorsprung 46. Über die beiden aneinanderstossenden Vorsprünge 46 ist zur Abdichtung und Zentrierung ein Stahlring 48 geschoben. Über den Vorsprung 46 des hintersten Rohrabschnittes 47, der in den Schacht 11 ragt, ist ein Ring 49 mit einer Diagonalstrebe 50 eingesetzt, welche über ein Zugorgan 51 drehbar mit der Nabe 22 bzw. dem hinteren Ende der Zugstange 5 verbunden ist. Am Ansatz 44 ist ein Rohrstutzen 52 angeschweisst, der über einen Schlauch 53 mit dem Schacht 11 verbunden ist. Das Rohr 12 des Schachtes 11 ist gegenüber dem hintersten Rohrabschnitt 47 mittels eines Dichtringes 54 abgedichtet.

Der im Schacht 10 eingesetzte Antrieb 3, 4 hat eine Grundplatte 60, die über Puffer 61 (z. B. aus Gummi) am Rohr 12 des Schachtes 10 abgestützt ist. Die Platte 60 kann zur sicheren Verankerung zusätzlich verstrebt sein. Auf der Platte 60 ist ein sich in Richtung der Achse 35 erstreckender, prismatischer Mehrkantansatz 62 mit einer axialen Durchgangsbohrung 63 angeschweisst. Auf dem Ansatz 62 ist ein Gehäuse 64 längsverschiebbar aber drehfest geführt. Das Gehäuse 64 ist relativ zur Platte 60 in Richtung der Achse 35 durch mehrere über den Umfang verteilte Hydraulikzylinder 65 (oder einen Ringzylinder) verschiebbar. Das Gehäuse 64 trägt einen Hydraulikmotor 66 mit einem Abtriebsritzel 67, das in einen Zahnkranz 68 eines auf das vordere Ende der Zugstange 5 aufgeschobenen Zahnrades 69 eingreift. Das Zahnrad 69 ist drehbar auf dem Gehäuse 64 abgestützt und zentriert. Das Zahnrad 69 überträgt das Drehmoment und den Axialschub über eine zweiteilige, beidseitig radial stirnverzahnte Büchse 70 auf einen drehfest und axial unverschiebbar, z. B. mittels weiterer Querbolzen 17, mit dem vorderen Ende der Zugstange 5 verbundenen Ring 71.

Im Betrieb werden der Hydromotor 66 und die Zylinder 65 mit Drucköl beaufschlagt, so dass über die Stange 5 der Fräskopf 6 gedreht und gegen das Stirnende des zu sanierenden Rohres 2 angepresst wird. Dieses Rohrende wird zusammen mit dem umgebenden Gestein, Erdreich oder allenfalls Beton durch die Fräswerkieuge 24 zerkleinert. Das abgebaute Material wird mittels Wasser aus den Düsen 40 durch die Öffnungen 26 und zwischen den Speichen 29 hindurch in neue Rohr 8 und durch dieses in den Schacht 11 geschwemmt. Das Rohr 8 wird durch das Zugorgan 51 nachgezogen. Um die dafür erforderlichen Kräfte gering zu halten, wird über den Stutzen 52 in den schmalen Spalt zwischen Aussenwand des Rohres 8 und der mit dem Fräskopf 6 hergestellten Bohrung über den Schlauch 53 und den Stutzen 52 ein Injektionsmittel von annähernd gleichem spezifischem Gewicht wie das umgebende Erdreich injiziert. Als Injektionsmittel eignet sich z. B. eine Bentonit-Zement-Suspension. Bentonit ist eine gemahlener Opalinuston, der mit Wasser eine spezifisch relativ schwere Emulsion bildet, die über längere Zeit flüssig bleibt. Das Injektionsmittel verhindert, dass die Bohrungswand einbricht, weil mit ihm der im Erdreich herrschende Druck samt dem Druckgradienten nach unten gehalten werden kann. Das neue Rohr 8 schwimmt also gewissermassen im Injektionsmittel, solange diese noch nicht ausgehärtet ist, und kann beim Vorschub des Fräskopfes 6 mit geringen Kräften nachgezogen werden.

Wenn der Hub der Zylinder 65 erschöpft ist, wird das Gehäuse 64 gegen die Platte 60 in den gegensinnigen Anschlag zurückgefahren und eine längere oder eine zusätzliche Büchse 70 eingesetzt. Dieser Vorgang wird wiederholt, bis die nächste Trennstelle zwischen den Stangensegmenten 16 vor dem Zahnrad 69 erscheinen. Dann wird der Ring 71 auf das nächste Segment 16 umgesetzt und gegebenenfalls am hinteren Ende ein weiterer Rohrabschnitt 47 angesetzt.

Um den Ausbau der Führungseinrichtung 7 und des Fräskopfes 6 nach Eintritt in den Schacht 10 zu erleichtern, kann es zweckmässig sein, die Grundplatte 60 und das Gehäuse 64 längs einer die Achse 35 enthaltenden Ebene zerlegbar auszubilden.

Demgegenüber sind für den Vorschub des neuen Rohres 8 bei der erfindungsgemässen Ausbildung bescheidene Kräfte erforderlich, sodass der Hubantrieb 4 klein und leicht ausgebildet werden kann. Der Antrieb 3, 4 kann deshalb so klein gebaut werden, dass er in einem normalen, ohnehin vorhandenen Kanalschacht 10, 11 Platz hat. Bei der erfindungsgemässen Lösung ist deshalb kaum ein Aushub an der Strassenoberfläche erforderlich, sodass die Verkehsbehinderung und die Arbeitsvorbereitungszeit drastisch reduziert werden können.

Weil bei der erfindungsgemässen Vorrichtung der Fräskopf 6 durch die Führungseinrichtung 7 im Rohr 2 geführt wird, ist er mit seiner konischen Frontseite mit den Fräswerkzeugen 24 im Gegensatz zum Stand der Technik selbstzentrierend. Die Gefahr, dass der Fräskopf 6 quer aus der Rohrachse 35 verläuft, ist deshalb praktisch ausgeschlossen.

Bei der erfindungsgemässen Vorrichtung kann eine Korrektur der Fräskopfachse gegenüber der Rohrachse 35 einfach und mit geringem Kraftaufwand durch die im Rohr 2 abstützende Führungseinrichtung 7 erreicht werden, wobei praktisch nur der seitliche Versatz, nicht die Parallelität dieser Achsen relevant ist. Beim Stand der Technik stützt sich demgegenüber der Fräskopf am eingepressten, neuen Rohr 8 ab. Es kann praktisch nur eine Winkelkorrektur des Fräskopfes gegenüber der Achse des neuen Rohres vorgenommen werden, womit ein bereits eingetretener, seitlicher Versatz des Fräskopfes oft kaum mehr korrigiert werden kann.

Weil bei der erfindungsgemässen Vorrichtung im Gegensatz zum Stand der Technik praktisch der gesamte Querschnitt des neu eingezogenen Rohres 8 für den Abtransport des abgebauten Materials frei ist, kann dieses Material sehr einfach abgeschwemmt werden.

Die erfindungsgemässe Vorrichtung ist erheblich kleiner und billiger als die bekannten Pressrohrvortriebsanlagen. Die Arbeitsvorbereitung zur Sanierung eines Kanalrohres ist bedeutend vereinfacht, weil praktisch kein Aushub erforderlich ist. Im Gegensatz zum bekannten Verfahren eignet sich die erfindungsgemässe Vorrichtung auch zum Einzug relativ dünnwandiger und dementsprechend billigerer und handelsüblicherer Rohre. Der Einsatz der erfidnungsgemässen Vorrichtung ist daher sehr wirtschaftlich.

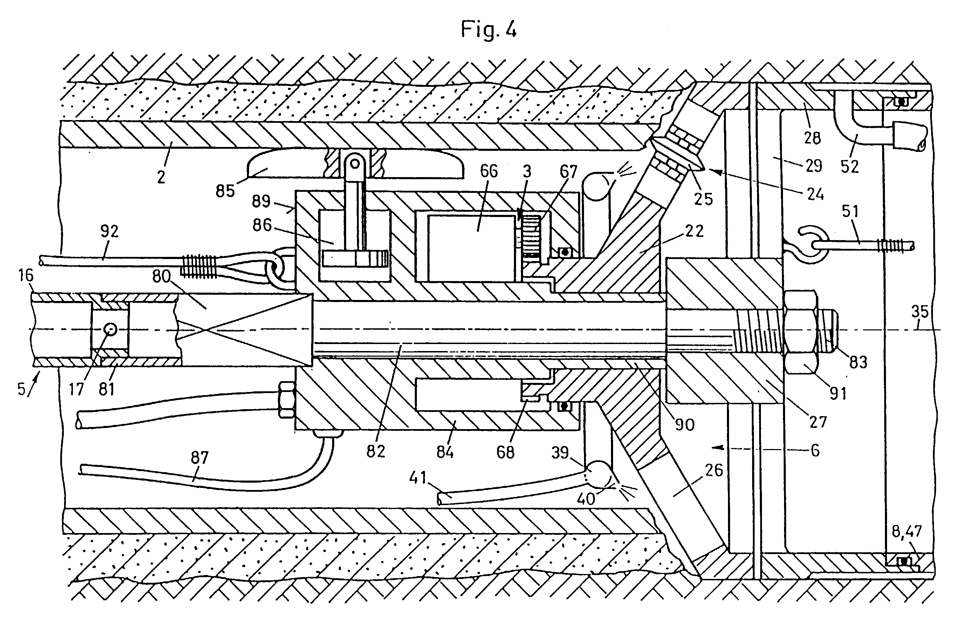

Bei der Ausführungsform nach Fig. 3 und 4 sind analoge Teile mit gleichen Bezugszeichen versehen, sodass sich eine detaillierte Erläuterung dieser Teile erübrigt. Die Ausführungsform nach Fig. 3 und 4 unterscheidet sich hauptsächlich von jener nach Fig. 1 und 2 dadurch, dass der Drehantrieb 3 beim Fräskopf 6 ist und dementsprechend die Stange 5 nicht dreht, und dass der Hubantrieb 4 anders ausgebildet ist.

Die Stange 5 ist hier als segmentiertes Vierkant-Rohr ausgebildet. Das hinterste Segment 80 hat einen vorderen Vierkant-Abschnitt 81 und einen zylindrischen hinteren Abschnitt 82 mit einem Gewindeansatz 83. Auf den Abschnitt 82 ist ein Gehäuse 84 der Führungseinrichtung 7 aufgeschoben, das über den Abschnitt 81 drehfest eingreift. Die Zentrierelemente sind hier z. B. drei als Stützelemente ausgebildete Kufen 85, die mittels einer Kolben/Zylinder-Einheit 86 radial einstellbar sind. Die nicht dargestellten Ventile für die Steuerung der Aggregate 86 sind im Gehäuse 84 eingebaut und werden durch ein nicht gezeigtes Steuergerät über eine elektrische Leitung 87 auf Messignale eines im Schacht 10 angeordneten Lasergerätes 88 hin angesteuert, welches eine Zielscheibe an der Stirnseite 89 des Gehäuses 84 abtastet. Damit wird eine automatische Geradeführung des Fräskopfes 6 erreicht.

Im Gehäuse 84 sind über den Umfang verteilt zwei oder sofern notwendig mehrere Hydromotoren 66 befestigt, die mit ihren Abtriebsritzeln 67 in den hier am Fräskopf 6 befestigten Zahnkranz 68 eingreifen. Der Fräskopf 6 ist auf einem hülsenförmigen Ansatz 90 des Gehäuses 84 drehbar gelagert und axial gegen die Nabe 27 des Schildes 28 abgestützt. Die Nabe 27 ist mit einer Mutter 91 auf dem Abschnitt 82 befestigt.

Der Hubantrieb 4 besteht hier aus einer nicht dargestellten, über der Öffnung des Schachtes 10 auf den Boden abgestellten Seilwinde, welche mittels eines Stahlseils 92 über eine an der Grundplatte 60 gelagerte Umlenkrolle 93 das Gehäuse 84 ober das hinterste Segment 80 gegen den Schacht 10 zieht. Statt dessen kann die Stange 5 eine Verzahnung 94 haben, in welche ein Ritzel 95 eines an der Grundplatte 60 befestigten Hydromotors 96 eingreift.

Die Grundplatte 60 hat eine Vierkant-Öffnung 97, in welcher die Vierkant-Stange 5 geführt ist, und über welche das Gegendrehmoment des Drehantriebs 3 auf das Rohr 12 des Schachtes 10 übertragen wird.

Das Zugorgan 51 zum Einziehen des neuen Rohres 8 ist ebenfalls ein Stahlseil. Es kann zweckmässig sein, dieses Seil nicht starr mit dem Ring 49 (Fig. 2) zu verbinden, sondern über einen z. B. manuell betätigbaren Seilzug. In diesem Fall wird das neue Rohr 8 nicht kontinuierlich mitgezogen, sondern schrittweise vorgeschoben. Dadurch kann der Hubantrieb 4 für den Fräskopf 6 von der für den Einzug des neuen Rohres 8 erforderlichen Kraft entlastet werden.

Abweichend von der in Fig. 3 und 4 dargestellten Ausführungsform kann die Vierkantstange 5 während des Vortriebs auch ortsfest zwischen den Schächten 10 und 11 angeordnet werden, wobei in diesem Fall das Gehäuse 84 der Führungseinrichtung 7 eine durchgehende Vierkant-Öffnung hat, die auf der Stange 5 drehfest aber längsverschiebbar geführt ist. Der Ansatz 90 ist dabei nicht länger und trägt hinten das entsprechend grössere Gewinde 83, und die Nabe 27 ist auf diesem Ansatz 90 befestigt. Diese Variante hat den Vorteil, dass der Vortrieb nicht zum Abbau von Segmenten 16 im Schacht 10 unterbrochen werden muss.

Bei beiden beschriebenen Ausführungsformen ist es möglich, die Vorrichtung im Betrieb gegen Grundwassereinbruch zu sichern. Dazu wird im neu eingezogenen Rohr 8 ein einigermassen druckdichtes Schott eingesetzt. Um das Gehäuse 84 der Führungseinrichtung 7 wird ein weiteres Schott mit einer gegen das Rohr 2 abdichtenden, nachgiebigen Gummilippe montiert. Eine Schlammpumpe fördert das Spülwasser mit dem abgetragenen Material ab. Eine Druckluftleitung mündet an der dem Fräskopf 6 zugewandten Seite eines der beiden Schotte. Durch Druckluftzufuhr wird im Raum zwischen den beiden Schotten ein Druck entsprechend dem Grundwasserspiegel aufrecht erhalten. Falls das Rohr 2 z. B. drei Meter unter dem Grundwasserspiegel verläuft, wäre ein Überdruck von etwa 0.3 bar erforderlich.

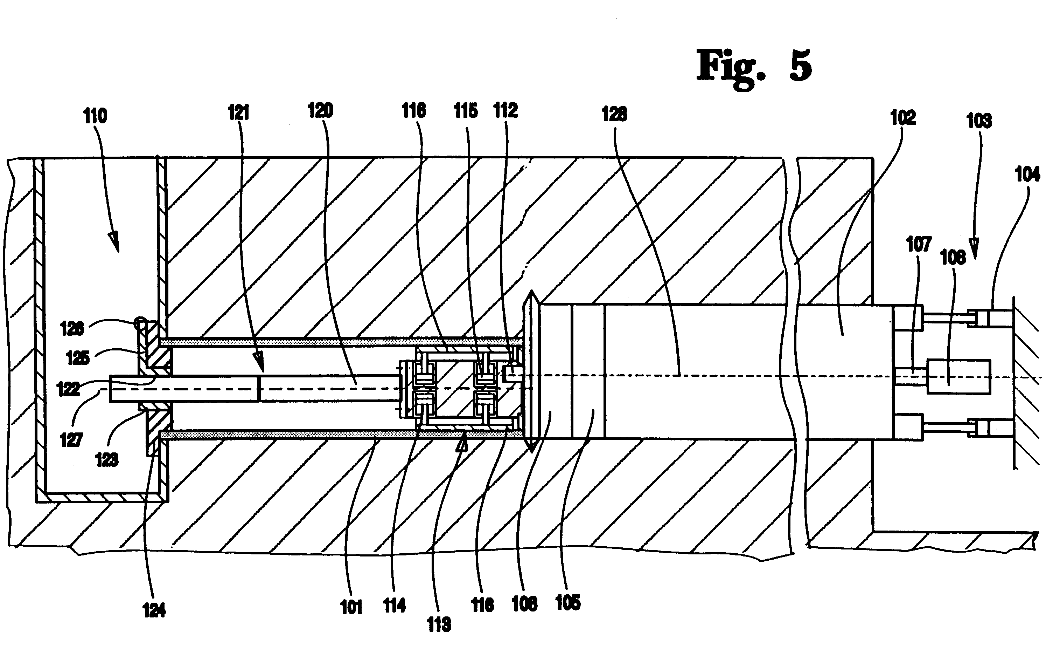

Die Ausführungsform nach Figuren 5 bis 9 eignen sich vor allem dann, wenn das Material um das zu ersetzende Rohr leicht einbricht. In diesem Falle kann die zu überwindende Reibung am einzuschiebenden, neuen Rohr ein Vielfaches von der am Fräskopf aufzubringenden Axialkraft sein, trotz Verwendung von Schlämmitteln. In diesen Fällen sind kräftige Pressen zum Vorschieben der neuen Rohre erforderlich, die zweckmässig in einer Baugrube installiert werden, um das neue Rohr in die gefräste Bohrung zu stossen.

Bei der Ausführungsform nach Fig. 5 soll das z. B. defekte oder unterdimensionierte Kanalisationsrohr 101 ersetzt werden durch ein neues, grösseres, sohlengleiches Kanalisationsrohr 102. Dieses wird von einer Baugrube 103 aus mit einer bekannten hydraulischen Pressvorrichtung 104 vorgetrieben. Am vorderen Ende ist an einem auf das Rohr 102 aufgesetzten Ring 105 ein Fräskopf 106 axial abgestützt. Dieser wird über eine Welle 107 oder direkt durch einen Hydraulikmotor 108 angetrieben.

Der Fräskopf 106 trägt einen Zapfen 112. Der Zapfen 112 ist in einer Führungseinrichtung 113 drehbar gelagert. Die Führungseinrichtung 113 ist mittels mindestens zweier Kolben/Zylinder-Einheiten 114, 115 gegenüber mindestens zwei Stützelementen mit Spannbacken 116 radial einstellbar. Dadurch ist der Fräskopf 106 im abzubauenden Rohr 101 geführt. Die Steuerung der Zylinder 114, 115 kann z. B. automatisch durch Laser-Telemetrie erfolgen. Im dargestellten Ausführungsbeispiel können z. B. die beiden unteren Zylinder 114 periodisch oder kontinuierlich der Führungseinrichtung 113 auf die richtige Exzentrizität, gegebenenfalls zusätzlich auf die richtige Neigung einstellen, während der obere Zylinder 115 mit einer konstanten Kraft von z. B. einer Tonne die beiden Spannbacken 116 gegen die Rohrwand presst. Dadurch wird ein ratterfreier Betrieb des Fräskopfes 106 erreicht. Die Spannbacken 116 reichen bis unmittelbar an den Fräskopf 106 heran und erstrecken sich trommelförmig an der Innenwandung des Rohres. Dies ist vor allem wichtig, wenn das Rohr 101 mit Stahl armiert ist. Zudem ist es zweckmässig, wenn für unterschiedliche Rohrdurchmesser entsprechend anders dimensionierte Spannbacken 116 oder sogar unterschiedlich grosse Sets von Führungseinrichtungen 113 verwendet werden, damit diese Spannbacken gleichmässig an der Innenwandung eines Rohres 101 aufliegen.

Am vorderen Ende der Führungseinrichtung 113 ist ein aus Segmenten 120 zusammengesetztes Vierkantrohr 121 festgeschraubt. Dieses Rohr ist analog zur Ausführungsform nach Fig. 3 in einer Vierkantöffnung 122 einer Nabe 123 eines Drehsicherungsmittels verschiebbar aber gegen Verdrehen gesichert geführt. Die Nabe 123 ist in einem an der Wand eines Schachtes 110 abgestützten Lagerkörper 124 schwenkbar und axial unverschiebbar gelagert. An der Nabe 122 ist ein Arm 125 befestigt, der mittels eines Zylinderaggregates 126 um die Achse 127 exzentrisch zur Achse 128 des neuen Rohres 102 einstellbar ist, und der Lagerzapfen 112 deshalb in zwei Koordinaten verstellbar ist. Dieses Vierkantrohr 121 wird vorzugsweise für das vor dem Abbauen vorgesehene Kalibrieren benützt, indem an seiner Frontseite ein dem abzubauenden Rohr in seinem Durchmesser annähernd gleichen Fräskopf aufgesetzt wird und dieser mittels diesem Vierkantrohr 121 bei einer gewissen Drehzahl durchgeschoben wird. Letzteres ist dann fürs Abbauen bereits montiert.

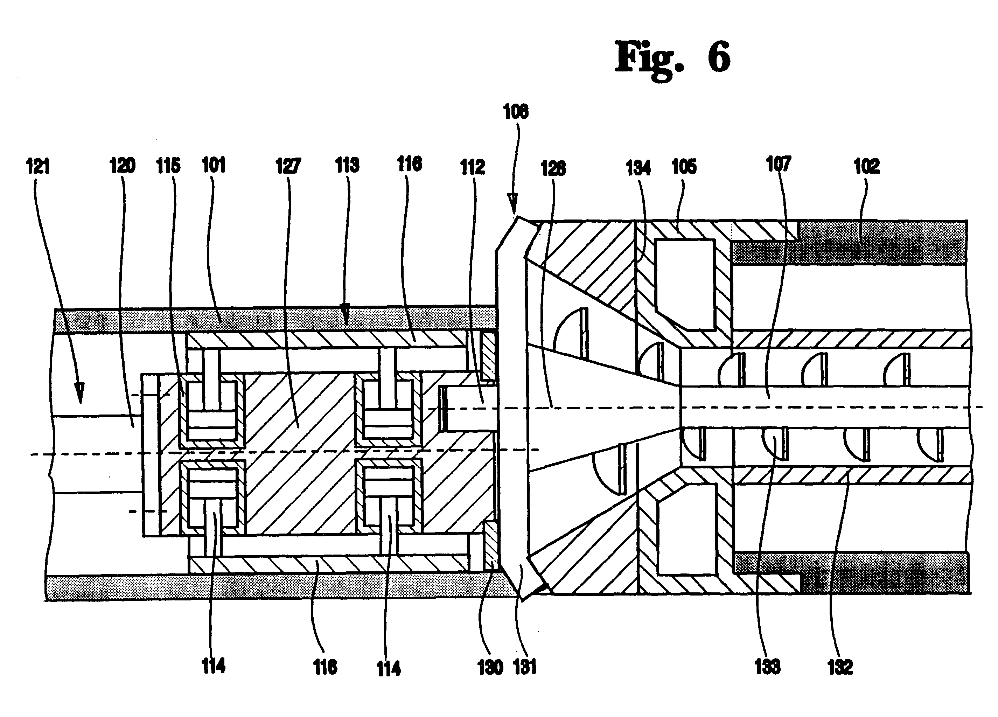

In Fig. 6 ist die Lagerung des Fräskopfes 106 etwas detaillierter dargestellt. Die Spannbacken 116 haben dem Fräskopf 106 zugewandt einen Kranz 130 mit Schneidelementen 138 mit Schnittkanten, z.B. aus Hartmetall, die mit meisselartigen Abbauwerkzeugen 131 des Fräskopfes 106 zusammenwirken zum Zerstükkeln von Armierungseisen. Die Antriebswelle 107 des Fräskopfes 106 verläuft in einem Innenrohr 132 und trägt eine Förderwendel 133 zum Wegtransport des abgebauten Materials. Um ein Verdrehen der Führungseinrichtung sicher zu vermeiden, ist es auch möglich, diesen jeweils bei Stillstand des Fräskopfes 106 schrittweise vorzuschieben und die Spannbacken 116 anschliessend fest gegen das Rohr 101 anzupressen. Der Fräskopf 106 ist auf einem als Maschinenrohr ausgebildeten Ring 105 über ein nur angedeutetes Axiallager 134 abgestützt. Dieses kann entweder so ausgebildet sein, dass der Fräskopf 106 relativ zum Ring 105 radial frei beweglich ist. Es kann jedoch je nach Anwendungsfall auch zweckmässig sein, den Fräskopf 106 auf dem Ring 105 auch radial zu führen.

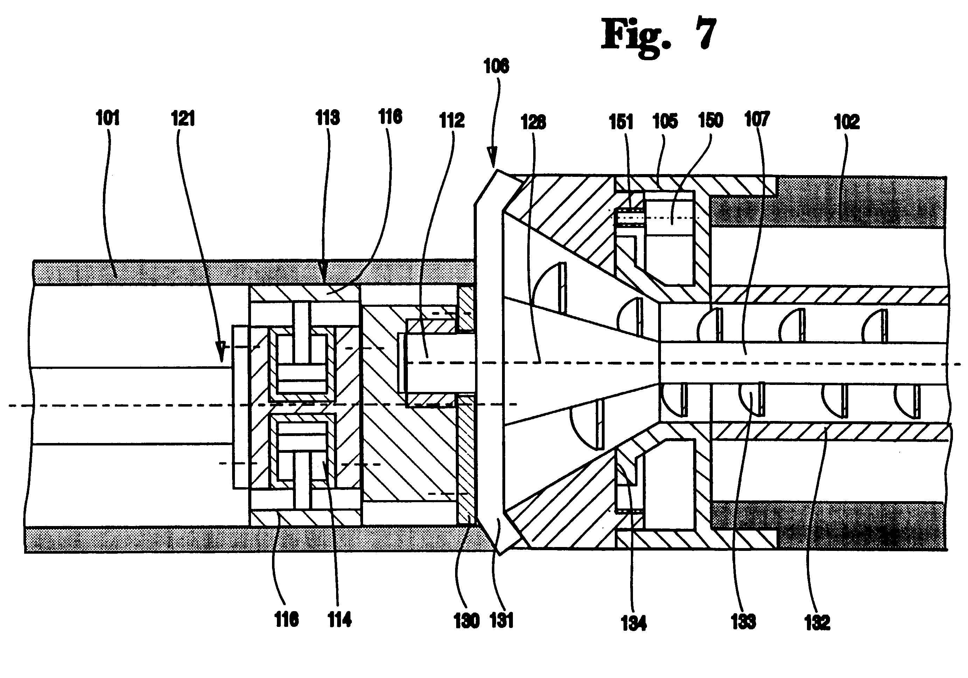

In Fig. 7 ist eine weitere Ausführungsform gezeigt, wobei analoge Bauteile gleiche Bezugszeichen tragen wie bei der Ausführungsform nach Fig. 5 und 6, so dass sich eine detaillierte Beschreibung dieser Teile erübrigt. Die Ausführungsform nach Fig. 7 unterscheidet sich von jener nach Fig. 5 und 6 hauptsächlich dadurch, dass der Fräskopf 106 von einem Motor 150 angetrieben wird, der unmittelbar hinter diesem angeordnet ist. Der Motor 150 ist dabei in dem Ring 105 seitlich zur Förderwendel 107 integriert und treibt den Fräskopf 106 über ein Zahnradgetriebe 151 an. Diese Ausführung hat den Vorteil, als durch diesen unmittelbaren Antrieb des Fräskopfes 106 höhere Leistungen als bei einem von aussen vorgesehenen Antrieb übertragen werden können.

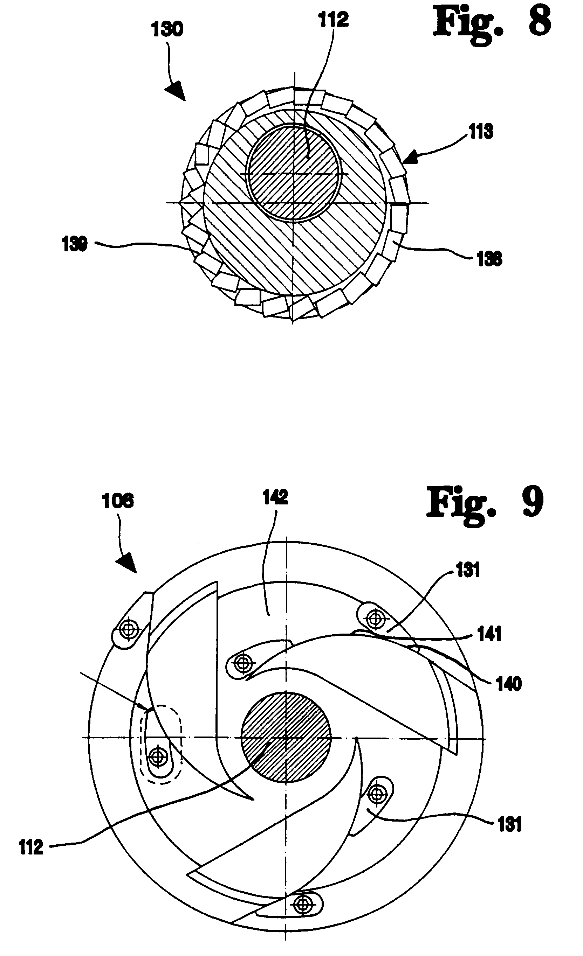

In Fig. 8 ist eine Stirnansicht des Messerkranzes 130 dargestellt. Wie ersichtlich sind die Schneidelemente 138 des Kranzes 130 in dichter Folge über den Umfang verteilt. Deren Schnitt- oder Scherkanten 139 haben zur Radialrichtung über den Umfang eine unterschiedliche Neigung, weil der Fräskopf 106 exzentrisch dreht.

Fig. 9 zeigt schematisch eine Stirnansicht des Fräskopfes 106 mit den meisselartigen Abbauwerkzeugen 131, deren Schnitt- oder Scherkanten 140 längs spiralförmigen Einlaufkanten 141 von drei Öffnungen 142 des Fräskopfes 196 angeordnet sind. Die in Fig. 6 angedeuteten Wendeln 133 des Wendelförderers schliessen an diese Einlaufkanten 141 an.

Das zu sanierende Rohr 101 kann vorgängig kalibriert werden, damit der Zentrierkopf mit den Stützelementen 116 längs der ganzen Länge des Rohres 1 verschoben werden kann. Bei dieser Kalibrierung werden mit einem Fräskopf, der dem Innendurchmesser des abzubauenden Rohres 101 entspricht, allfällige ins Innere des Rohres 101 ragende Vorsprünge, z. B. bei seitlichen Einläufen, abgefräst.

Die vorliegende Erfindung ist mit diesen beschriebenen Ausführungen hinlänglich erläutert. Die Führungseinrichtung könnte selbstverständlich noch in anderer Art konstruiert sein, so zum Beispiel als mit dem Fräskopf starr verbundenem Führungsdorn, der im abzubauenden Rohr dreht. Das Kalibrieren dieses Rohres könnte dahingehend erfolgen, als der Führungsdorn an seiner Frontseite einen zusätzlichen Messerkranz aufweist, mit welchem allfällige Unebenheiten im Rohr im Sinne eines Kalibrierens gleichzeitig mit dem Abbauen desselben entfernt würden.

## Patentansprüche

1. Verfahren insbesondere zum Ersetzen von Kanalisationsrohren, bei dem mittels eines vorantreibbaren sich drehenden Fräskopfes (6,106) das zu ersetzende Rohr (2,101) oder ähnlichem abgebaut und der Fräskopf (6,106) während dem Abfräsen im abzubauenden Rohr (2,101) zwangsgeführt wird, dadurch gekennzeichnet, dass der Fräskopf (6, 106) an seiner Stirnseite Schneidkanten (24, 140) aufweist, mittels denen er beim Drehen das zu ersetzende Rohr (2,101) und gegebenenfalls dieses umgebende Material stirnseitig abfräst und letztere nach dem Abfräsen durch den mit Öffnungen (26,142) versehenen Fräskopf (6,106) und durch ein Fördermittel, insbesondere eine Förderwendel (133), aus dem sanierten neuen Rohr (102) wegtransportiert werden.

2. Verfahren nach Anspruch 1, dadurch gekennzeichnet, dass der Fräskopf (6,106) mittels einer an ihm stirnseitig angeordneten Führungseinrichtung (7,113) im abzubauenden Rohr (2,101) zwangsgeführt wird, wobei diese Führungseinrichtung (7,113) mit einem einstellbaren Druck gegen die Innenwandung dieses Rohres (2,101) angedrückt wird.

3. Verfahren nach Anspruch 1 oder 2, dadurch gekennzeichnet, dass der Fräskopf (6,106) in Achsrichtung des abzubauenden Rohres (2,101) mit einer Vorschubgeschwindigkeit gezogen und/oder von den unmittelbar hinter diesem eingeführten Ersatzrohren (8,102) gestossen wird.

4. Verfahren nach einem der Ansprüche 1 bis 3, dadurch gekennzeichnet, dass das zu ersetzende Rohr (2,101) vor dem Abbauen mittels eines separaten Fräsers durchgehend auf einen annähernd konstanten Durchmesser kalibriert wird.

5. Vorrichtung zur Durchführung des Verfahrens nach einem der Ansprüche 1 bis 4, mit einem vorantreibbaren Fräskopf, der das zu ersetzende Rohr oder ähnlichem abbaut, dem Fräskopf (6,106) eine im abzubauenden Rohr (2,101) zentrierbare Führungseinrichtung (7,113) zugeordnet ist, dadurch gekennzeichnet, dass der Fräskopf (6,106) derart ausgebildet ist, dass er an seiner Stirnseite Schneidkanten (24,140) aufweist, mittels denen er beim Drehen das zu ersetzende Rohr (2,101) und gegebenenfalls dieses umgebende Material stirnseitig abfräst und letztere nach dem Abfräsen mittels eines Fördermittels, insbesondere einer Förderwendel (133), aus dem sanierten neuen Rohr (102) wegtransportierbar sind, wobei das Fördermittel an den mit Öffnungen (26,142) versehenen Fräskopf (6,106) anschliesst.

6. Vorrichtung nach Anspruch 5, dadurch gekennzeichnet, dass der Fräskopf (6,106) drehbar an der stirnseitig an ihm angeordneten Führungseinrichtung (7,113) gelagert ist.

7. Vorrichtung nach Anspruch 5 oder 6, dadurch gekennzeichnet, dass die Führungseinrichtung (7,113) einen mit dem Fräskopf (6,106) drehverbundenen Lagerkörper (33,124) und mindestens zwei gegenüber diesem radial einstellbaren Stützelementen aufweist, wobei letztere mit einem einstellbaren Druck gegen die Innenwandung des abzubauenden Rohres (2,101) andrückbar sind und zusammen trommelförmig ausgebildet sind, um das abzubauende Rohr (2.101) unmittelbar vor dem Fräskopf (6,106) möglichst vollumfänglich zu stützen.

8. Vorrichtung nach Anspruch 7, dadurch gekennzeichnet, dass die Stützelemente sich jeweils aus einer radial wirkenden Kolben/Zylinder-Einheit (114,115) sowie aus einer abgerundeten, an deren Kolben gelenkig gelagerten Spannbacke (116) zusammensetzen und letztere beim Vorantreiben des Fräskopfes (6,106) an der Innenwandung des Rohres (2,101) gleiten.

9. Vorrichtung nach einem der Ansprüche 5 bis 8, dadurch gekennzeichnet, dass der Fräskopf (6,106) an der Führungseinrichtung (7,113) radial einstellbar gelagert ist.

10. Vorrichtung nach Anspruch 9, dadurch gekennzeichnet, dass der Fräskopf (6,106) mit seiner Drehachse exzentrisch zur Längsachse (35,127) des abzubauenden Rohres (2,101) angeordnet ist und dabei sein Aussendurchmesser grösser als derjenige des Rohres (2,101) ist.

11. Vorrichtung nach einem der Ansprüche 5 bis 10, dadurch gekennzeichnet, dass zwecks Zerkleinern von in dem abzubauenden Rohr (2,101) eingebetteten Armierungsstahl die Führungseinrichtung (7,113) über deren Umfang verteilte Schneidelemente (138) hat, die unmittelbar an die Schneidkanten (140) des Fräskopfes (6,106) anschliessen und mit diesen zusammenwirken.

12. Vorrichtung nach einem der Ansprüche 5 bis 11, dadurch gekennzeichnet, dass die Führungseinrichtung (113) zur Verhinderung eines Drehens mit einem Drehsicherungsmittel versehen ist.

13. Vorrichtung nach Anspruch 12, dadurch gekennzeichnet, dass das Drehsicherungsmittel eine mit der Führungseinrichtung (113) verbundene Stange aufweist, welche vor dem Fräskopf (106) durch das abzubauende Rohr (101) führt und in dem nachfolgenden Schacht gehalten ist.

14. Vorrichtung nach Anspruch 12 oder 13, dadurch gekennzeichnet, dass die Führungseinrichtung (113) in Drehrichtung von dem Drehsicherungsmittel einstellbar ist und zudem deren Stützelemente durch ihre unabhängige radiale Verstellmöglichkeit erlauben, dass der Achsabstand des exzentrisch geführten Fräskopfes (106) zur Längsachse des Rohres (101) verstellbar ist.

15. Vorrichtung nach einem der Ansprüche 5 bis 14, dadurch gekennzeichnet, dass der Fräskopf (6,106) durch einen ausserhalb des Kanalisationsrohres befindlichen Motor (108) und/oder durch einen diesen unmittelbar und im Kanalisationsrohr angeordneten Motor (66,150) antreibbar ist.

16. Vorrichtung nach einem der Ansprüche 5 bis 14, dadurch gekennzeichnet, dass zur Verhinderung von einem Grundwassereinbruch der Fräskopf vorn und hinten abgedichtet ist und in diesen abdichtend gebildeten Raum ein Überdruck erzeugt wird.

17. Führungseinrichtung für eine Vorrichtung nach einem der Ansprüche 5 bis 16, dadurch gekennzeichnet, dass sie radial einstellbare Stützelemente zur Zentrierung in einem abzubauenden Rohr (2,101) sowie ein als Lagerkörper (33,124) ausgebildetes Verbindungsmittel für die Verbindung mit einem diesen zentrierbaren Fräskopf (6,106) aufweist.

18. Fräskopf für eine Vorrichtung nach einem der Ansprüche 5 bis 16, dadurch gekennzeichnet, dass er ein als Lagerzapfen (112) oder Nabe (22) ausgebildetes Verbindungsmittel zum Zentrieren desselben mit einer Fürungseinrichtung (7,113) aufweist.

## Claims

1. Method for the replacement of, in particular, sewage pipes, during which method the pipe (2,101) to be replaced or the like is worked by means of a rotating cutter head (6,106) that can be advanced, whereby the cutter head (6,106) is guided during the cutting operation in the pipe (2,101) to be worked, characterized in that the cutter head (6,106) is provided at its front side with cutting edges (24,140), therewith it is cutting at the front side the pipe (2,101) to be worked and in case the material surrounding the pipe, and the latter is eliminated after cutting through openings (26,142) arranged in the cutter head (6,106) and further through a conveyor, especially a spiral conveyor (133), out of the new replaced pipe (102).

2. Method as claimed in claim 1, characterized in that the cutter head (6,106) is guided by means of a guide mechanism (7,113), mounted on the front side of said cutter head, in the pipe (2,101) to be worked, during which method this guide mechanism (7,113) is pressed against the inner wall of this pipe (2,101) with an adjustable pressure.

3. Method as claimed in claim 1 or 2, characterized in that the cutter head (6,106) is pulled at a feed rate in the axial direction of the pipe (2,101) to be worked and/or is thrust by the replacement pipes (8,102) inserted directly behind said pipe to be worked.

4. Method as claimed in any one of the claims 1 to 3, characterized in that prior to working, the pipe (2,101) to be replaced is calibrated throughout to an approximately constant diameter by means of a separate cutter.

5. Device for carrying out the method of any one of claims 1 to 4, with a cutter head (6,106) that can be advanced and which works the pipe to be replaced or the like, a guide mechanism (7,113), which can be centred in the pipe (2,101) to be worked, is assigned to the cutter head (6,106), characterized in that the cutter head (6,106) is arranged in such a way, that it is provided with cutting edges (24,140) at its front side, therewith during the rotation it is cutting the pipe (2,101) to be worked and in case the material surrounding the pipe, and after cutting, the latter is eliminated through a conveyor, especially a spiral conveyor (133), out of the new replaced pipe (102), whereby the conveyor is following to the cutter head (6,106) arranged with openings (26,142).

6. Device as claimed in claim 5, characterized in that the cutter head (6,106) can be rotated at the guide mechanism (7,113) mounted on the front side of said cutter head.

7. Device as claimed in claim 5 or 6, characterized in that the guide mechanism (7,113) exhibits a bearing body (33,124), connected rotationally to the cutter head (6,106), and at least two supporting elements, which can be adjusted radially with respect to said bearing body, where the latter can be pressed with an adjustable pressure against the inner wall of the pipe (2,101) to be worked and altogether are designed in the shape of a drum, in order to support over as much of the circumference as possible of the pipe (2,101) to be worked directly in front of the cutter head (6,106).

8. Device as claimed in claim 7, characterized in that the supporting elements comprise a radially acting piston-cylinder unit (114,115) and a rounded off chuck (116), articulated at the piston and said chuck slides on the inner wall of the pipe (2,101) when the cutter head (6,106) is advanced.

9. Device as claimed in any one of the claims 5 to 8, characterized in that the cutter head (6,106) is mounted radially adjustably on the guide mechanism (7,113).

10. Device as claimed in claim 9, characterized in that the cutter head (6,106) is arranged with its axis of rotation eccentrically to the longitudinal axis (35,127) of the pipe (2,101) to be worked and its outer diameter is greater than that of the pipe (2,101).

11. Device as claimed in any one of the claims 5 to 10, characterized in that the purpose of comminuting reinforced steel embedded in the pipe (2,101) to be worked, the guide mechanism (7,113) has cutting elements (138), which are distributed over its circumference and attach directly to the cutting edges (140) of the cutter jead (6,106) and interact with said cutter head.

12. Device as claimed in any one of the claims 5 to 11, characterized in that the guide mechanism (113) is provided with a safeguard against rotation to prevent rotation.

13. Device for carrying out the method of any one as claimed in claim 12, characterized in that the safeguard against rotation exhibits a rod, which is connected to the guide mechanism (113) and which leads through the pipe (101) to be worked in front of the cutter head (106) and is held in the subsequent manhole.

14. Device as claimed in claim 12 or 13, characterized in that the guide mechanism (113) can be adjusted by the safeguard against rotation in the direction of rotation and additionally its supporting elements allow due to their independent radial setting option that the axial distance of the eccentrically guided cutter head (106) can be adjusted relative to the longitudinal axis of the pipe (101).

15. Device as claimed in any one of the claims 5 to 14, characterized in that the cutter head (6,106) can be driven by means of a motor (108), situated outside the sewer pipe, and/or by means of a motor (66,150) arranged directly on it and in the sewer pipe.

16. Device as claimed in any one of the claims 5 to 14, characterized in that the prevent ground water from breaking in, the cutter head is sealed in the front and in the rear and overpressure is generated in this sealed space.

17. Guide mechanism for a device as claimed in any on the claims 5 to 16, characterized in that it exhibits radially adjustable supporting elements to center in a pipe (2,101) to be worked and connecting means, designed as a bearing body (33,124), to connect to a cutter head (6,106), which can be centered with said guide mechanism.

18. Cutter head for a device as claimed in any on the claims 5 to 16, characterized in that it exhibits connecting means, designed as a bearing jounal (112) or a hub (22), in order to center said cutter head with a guide mechanism.

## Revendications

1. Procédé, notamment pour le remplacement de canalisations d'égout, dans lequel une tête fraiseuse (6, 106) animée d'un mouvement de rotation et d'un mouvement d'avance élimine la canalisation (2, 101) ou similaire à remplacer et dans lequel la tête fraiseuse (6, 106), lors du fraisage, est guidée dans ladite canalisation (2, 101) à éliminer, caractérisé par le fait que la tête fraiseuse (6, 106) porte sur sa face frontale des arêtes coupantes (24, 140) à l'aide desquelles, lors de sa rotation, elle fraise la canalisation (2, 101) à remplacer côté frontal et le cas échéant le matériau environnant et par le fait qu'après fraisage les matériaux sont amenés à l'extérieur de la nouvelle canalisation (102) rénovée à travers la tête fraiseuse (6, 106) pourvue d'ouvertures (26, 142), par un dispositif de transport, par exemple une vis transporteuse (133).

2. Procédé selon la revendication 1, caractérisé par le fait que la tête fraiseuse (6, 106) est guidée à l'intérieur de la canalisation (2, 101) à éliminer au moyen d'un dispositif de guidage (7, 113) disposé sur sa face frontale, le dispositif de guidage (7, 113) étant appliqué avec une pression réglable contre la paroi intérieure de la canalisation (2, 101).

3. Procédé selon la revendication 1 ou la revendication 2, caractérisé par le fait que la tête fraiseuse (6, 106) est tirée et/ou poussée par la canalisation (8, 102) de remplacement mise en place juste derrière elle, avec une certaine vitesse d'avance suivant la direction axiale de la canalisation (2, 101) à remplacer.

4. Procédé selon l'une des revendications 1 à 3, caractérisé par le fait qu'avant son élimination, la canalisation (2, 101) à remplacer est amenée sur toute sa longueur à un diamètre pratiquement constant à l'aide d'une fraise séparée.

5. Dispositif pour la mise en oeuvre du procédé selon l'une des revendications 1 à 4, comportant une tête fraiseuse (6, 106) animée d'un mouvement d'avance qui élimine la canalisation ou similaire à remplacer, un dispositif de guidage (7, 113) qui est associé à la tête fraiseuse (6, 106) et est centré dans la canalisation (2, 101) à éliminer, caractérisé par le fait que la tête fraiseuse (6, 106) est agencée de manière telle qu'elle présente sur sa face frontale des arête coupantes (24, 140) au moyen desquelles, lors de sa rotation, elle fraise la canalisation (2, 101) à remplacer et éventuellement le matériau environnant côté frontal et par le fait qu'après fraisage, les matériaux sont évacués hors de la canalisation (102) rénovée par un dispositif de transport, notamment d'une vis transporteuse (133), le dispositif de transport étant disposé à la suite de la tête fraiseuse (6, 106) pourvues d'ouvertures (26, 142).

6. Dispositif selon la revendication 5, caractérisé par le fait que la tête fraiseuse (6, 106) est montée tournante sur le dispositif de guidage (7, 113) disposé côté frontal.

7. Dispositif selon la revendication 5 ou la revendication 6, caractérisé par le fait que le dispositif de guidage (7, 113) comporte un corps de palier (33, 124) lié en rotation à la tête fraiseuse (6, 106) et au moins deux éléments d'appui réglables radialement par rapport à celui-ci, lesdits éléments d'appui pouvant être appliqués avec une pression réglable contre la paroi intérieure de la canalisation (2, 101) à éliminer et ayant ensemble la forme d'un tambour aux fins de soutenir sur le maximum de la longueur de la circonférence la canalisation (2, 101) à éliminer, juste devant la tête fraiseuse (6, 106).

8. Dispositif selon la revendication 7, caractérisé par le fait que les éléments d'appui sont composés chacun d'un ensemble piston/cylindre (114, 115) qui agit radialement ainsi que d'une mâchoire (116) de serrage arrondie articulée sur le piston, laquelle mâchoire de serrage glisse sur la paroi interne de la canalisation (2, 101) lors de l'avance de la tête fraiseuse (6, 106).

9. Dispositif selon l'une des revendications 5 à 8, caractérisé par le fait que la tête fraiseuse (6, 106) est montée sur le dispositif de guidage (7, 113) avec possibilité de réglage dans la direction radiale.

10. Dispositif selon la revendication 9, caractérisé par le fait que l'axe de rotation de la tête fraiseuse (6, 106) est excentré par rapport à l'axe longitudinal (35, 127) de la canalisation (2, 101) à éliminer et que le diamètre extérieur de la fraise est supérieur à celui de la canalisation (2, 101).

11. Dispositif selon l'une des revendications 5 à 10, caractérisé par le fait que pour réduire en morceaux l'acier de l'armure noyée dans la canalisation (2, 101) à éliminer, le dispositif de guidage (7, 113) est pourvu sur sa périphérie d'éléments coupants (138) qui font suite immédiatement aux arêtes coupantes (140) de la tête fraiseuse (6, 106) et coopèrent avec celles-ci.

12. Dispositif selon l'une des revendications 5 à Il, caractérisé par le fait que, afin d'empêcher sa rotation, le dispositif de guidage (113) est pourvu d'un moyen de blocage en rotation.

13. Dispositif selon la revendication 12, caractérisé par le fait que le moyen d'immobilisation en rotation comporte une barre qui est reliée au dispositif de guidage (113), s'étend sur le devant de la tête fraiseuse (106), à l'intérieur de la canalisation (101) à éliminer, et est tenue dans le puits suivant.

14. Dispositif selon la revendication 12 ou la revendication 13, caractérisé par le fait que le dispositif de guidage (113) peut être positionné angulairement à l'aide du moyen d'immobilisation en rotation et qu'en outre ses éléments d'appui permettent, grâce à leur possibilité de réglage indépendant dans la direction radiale, de régler le décalage de l'axe de la tête fraiseuse (106) excentrée par rapport à l'axe longitudinal de la canalisation (101).

15. Dispositif selon l'une des revendications 5 à 14, caractérisé par le fait que la tête fraiseuse (6, 106) est entraînée par un moteur (108) placé à l'extérieur de la canalisation d'égout et/ou par un moteur (66, 150) placé au voisinage immédiat de celle-ci, dans la canalisation d'égout.

16. Dispositif selon l'une des revendications 5 à 14, caractérisé par le fait que pour éviter l'entrée d'eau provenant du sous-sol, la tête fraiseuse est rendue étanche vers l'avant et vers l'arrière et une pression positive est appliquée à l'intérieur de l'enceinte étanche ainsi formée.

17. Dispositif de guidage pour un dispositif selon l'une des revendications 5 à 16, caractérisé par le fait qu'il comporte des éléments d'appui réglables dans la direction radiale à des fins de centrage dans une canalisation (2, 101) à éliminer ainsi qu'un moyen de liaison agencé sous forme de corps de palier (33, 124) pour la liaison avec une tête fraiseuse (6, 106) centrable.

18. Tête fraiseuse pour un dispositif selon l'une des revendications 5 à 16, caractérisée par le fait qu'elle comporte un élément de liaison agencé sous forme de tourillon (112) ou de moyeu (22) à des fins de centrage de ladite tête fraiseuse par rapport à un dispositif de guidage (7, 113).
